# FASCICULE DE BREVET EUROPEEN

(11) **EP 3 543 672 B1**
(45) Date de publication et mention de la délivrance du brevet: **11.01.2023**
(21) Numéro de dépôt: 18163536.8
(22) Date de dépôt: 23.03.2018
(51) Int. Cl.: G01M 13/027, G01M 13/025

(54) **BANC D'ESSAIS DYNAMIQUE PAR CHARGEMENT ELECTROMAGNETIQUE DE COUSSINETS**
DYNAMISCHER PRÜFSTAND ZUR ELEKTROMAGNETISCHEN AUFLADUNG VON LAGERN
BENCH FOR DYNAMIC TESTING BY ELECTROMAGNETIC CHARGING OF BEARINGS

(43) Date de publication de la demande: 25.09.2019
(73) Titulaire: Breuer-Technical-Development, en abrégé "B.T.D." SPRL, 4960 Malmedy (BE)
(72) Inventeur: BREUER, Ernst, 4760 BUELLINGEN (BE)
(74) Mandataire: AWA Benelux

(56) Documents cités:
- EP-A1- 2 261 630
- US-A1- 2006 070 461

## Description

### Objet de l'invention

La présente invention se rapporte au domaine technique des bancs d'essais utilisés soit pour tester les coussinets des paliers lisses de systèmes bielles/manivelles tels que les paliers de vilebrequins de moteurs thermiques de véhicules automobiles, soit pour tester le pouvoir lubrifiant de différentes huiles dans des conditions identiques.

### Etat de la technique

On connaît deux familles de bancs d'essais permettant d'une part de tester la résistance aux efforts de traction des paliers de vilebrequins de moteurs à combustion de véhicules automobiles et d'autre part de confirmer expérimentalement les calculs de lubrification de paliers soumis à des charges dynamiques.

Soit on utilise directement les moteurs sur banc de test, avec comme avantage que les résultats de lubrification sont obtenus dans les conditions réelles de fonctionnement, et comme désavantages que les essais nécessitent une instrumentation compliquée, sont chers suite à l'utilisation de moteurs complets et sont longs car les sollicitations des paliers sont limitées à celles procurées par la charge moteur.

Soit on utilise des machines d'essais simplifiées sur le plan cinématique et géométrique modélisant le système bielle/manivelle. Ces systèmes permettent de faciliter les mesures, qui sont ensuite extrapolées aux cas de fonctionnement réels.

Ainsi, le document FR 2 864 236 de Renault divulgue un dispositif de test de résistance aux efforts de traction d'un palier de vilebrequin constitué d'un chapeau de palier fixé sur un carter cylindres de moteur à combustion interne. Ce dispositif de test comporte des moyens de traction d'un tourillon logé dans le palier à la place du vilebrequin, ces moyens simulant les efforts radiaux imposés au palier par le vilebrequin lors du fonctionnement du moteur.

Le document FR 2 998 670 de Peugeot Citroën Automobiles divulgue un banc d'essais et un procédé pour tester des propriétés tribologiques d'un système formé par un maneton et des demi-coussinets pour moteur, notamment de véhicule automobile. Ce banc d'essais comporte un arbre moteur apte à entraîner en rotation un maneton alésé issu d'un vilebrequin contre lequel les demi-coussinets sont maintenus en contact par une tête de bielle, et un système de contrainte apte à appliquer des efforts répétés et cycliques sur la tête de bielle de manière à simuler des efforts subis par le système formé par le maneton et les demi-coussinets lors d'un fonctionnement réel du moteur du véhicule automobile. Les efforts répétés sont appliqués sur la tête de bielle par un bras qui est déplacé par un excentrique rotatif positionné d'un côté du bras opposé au côté du bras comportant une portion en saillie coopérant avec la tête de bielle.

Dans l'état de la technique, on connaît aussi des bancs d'essais pour tester soit des paliers à roulements, soit des paliers lisses, avec une mise en charge de type électromagnétique, mais dans ce dernier cas la charge n'est pas appliquée sur des coussinets de palier via un système de bielle comme dans un vilebrequin de moteur thermique.

Ainsi, le document DE 10 2008 048 131 A1 divulgue un banc d'essais permettant des mesures de friction sur des paliers à roulements sous une charge contrôlée et dynamique, celle-ci pouvant être appliquée notamment par des actionneurs électromagnétiques.

Le document JP2001050863A divulgue une machine rotative de test de paliers lisses. La charge est appliquée par un actionneur électromagnétique dont le noyau est monté sur l'arbre rotatif. La force magnétique exercée est contrôlée par ajustement de l'intervalle entre l'aimant et le noyau. L'actionneur agit directement sur l'axe supportant les paliers.

Dans le modèle d'utilité DE 90 07 394 U1, on mesure un moment de friction sur des paliers à roulements en appliquant une charge avec des moyens électromagnétiques (sur le principe de la ventouse électromagnétique) via un levier, directement sur la partie fixe du roulement.

Dans le document SU 1212430 A1, la charge est appliquée radialement à des paliers supportés par un arbre, par des moyens électromagnétiques (bobine coaxiale de l'arbre) mais sans utilisation de bielles ou leviers.

Notamment dans P. Michaud et al, Development of an Experimental Device to Study Real Connecting-Rod Bearings Functioning in Severe Conditions, J. Tribol. 129(3), 647-654 (Feb 16, 2007), on présente une machine d'essais appelée « MEGAPASCALE » (Machine d'Essais pour Guidage d'Arbre par Paliers Sous Charge ALternées Elevées), qui permet d'obtenir un régime maximal de 20000 Tr/min, un chargement dynamique de 90kN en compression (resp. 60kN en traction, et 20kN en latéral), ainsi que l'utilisation de bielles réelles de moteurs thermiques, dans des conditions réelles de lubrification. Les mesures suivantes sont effectuées : débit d'huile pour les paliers de bielles, diagramme de charge appliquée, thermographie des bielles, température à l'interface film/solide, pression et épaisseur de film lubrifiant, etc.

La machine d'essais se caractérise par les éléments suivants :
- une charge dynamique sinusoïdale sur deux bielles d'essais ;
- une charge générée par des excentriques tournant dans les paliers de tête de bielle ;
- une position tête-bêche des deux bielles d'essais pour diminuer les efforts sur le palier de broche (arbre de support).

Le document EP 2 261 630 A1 divulgue un banc de charge qui a pour but d'exercer, sur l'arbre rotatif d'un mécanisme à tester, tel qu'un actionneur ou analogue, des charges radiales et couples variables délivrés par des moyens commandables de reproduction de couple dynamique et de charge dynamique. Avantageusement, lesdits moyens commandables de reproduction se composent de deux modules de reproduction identiques, disposés parallèlement et symétriquement par rapport audit arbre rotatif à tester, chacun d'eux comprenant un moteur-couple, une barre de torsion et une liaison à bielle-manivelles reliant la barre de torsion à l'arbre rotatif du mécanisme à tester.

Le document US 2006/0070461 A1 divulgue un dispositif de charge dynamique (DLF) pour tester une unité sous test (UUT) comprenant un système de charge latérale qui applique un profil de charge latérale variant dans le temps à l'arbre d'entraînement de l'UUT et un codeur qui mesure sa rotation angulaire. Le système de charge latérale comprend un support de charge autour de l'arbre d'entraînement, un actionneur qui applique une force latérale au support de charge, un capteur de force pour mesurer la force latérale appliquée et un contrôleur latéral pour ajuster un signal de commande à l'actionneur pour mettre en œuvre un profil de charge latérale. Le DLF peut également inclure un système de charge de torsion qui applique un profil de charge de torsion variable dans le temps à l'arbre d'entraînement.

### Buts de l'invention

La présente invention vise à fournir un banc d'essais permettant d'obtenir des mesures de friction sur des (demi-)coussinets de palier lisse dans un dispositif modélisant le système bielle-manivelle (vilebrequin), sous une charge dynamique très élevée, parfaitement contrôlable et ajustable, et donc de performance supérieure à celle des bancs d'essais de l'état de la technique.

L'invention a en outre pour but de fournir un banc d'essais permettant d'obtenir des mesures de friction et de tester des paliers/coussinets sans devoir monter un moteur complet avec tous les équipements nécessaires à son fonctionnement sur le banc d'essais.

### Principaux éléments caractéristiques de l'invention

La présente invention se rapporte à un banc d'essais pour tester les propriétés de friction, ou tribologiques, d'au moins un palier lisse ou coussinet d'essai, ledit banc d'essais comprenant un arbre tournant, ledit coussinet assurant le guidage de l'arbre tournant lorsque des efforts de traction ou compression sont appliqués de manière dynamique audit coussinet, un levier, un support de coussinet sur lequel est placé l'arbre tournant et une bielle ayant une tête montée sur l'arbre par l'intermédiaire du coussinet, caractérisé en ce que le banc d'essais comprend un actionneur électromagnétique apte à appliquer un effort variable dans le temps sur la bielle, ledit actionneur électromagnétique coopérant avec le levier faisant un angle droit avec la bielle, ledit levier procurant une démultiplication de l'effort appliqué par l'actionneur sur la bielle et en ce que l'actionneur électromagnétique est sous forme d'une ventouse électromagnétique qui génère un effort en traction ou en compression compris entre 0 et 120 kN pour une valeur d'entrefer comprise entre 8 et 1 mm.

Selon des formes d'exécution préférées de l'invention, le banc d'essais comporte en outre au moins une des caractéristiques suivantes ou une combinaison appropriée de celles-ci :
- le facteur de démultiplication de l'effort par le levier est compris entre 5 et 8;
- l'actionneur électromagnétique est sous forme d'une ventouse électromagnétique qui génère un effort en traction ou en compression compris entre 0 et 120 kN pour une valeur valeur d'entrefer comprise entre 8 et 1 mm ;
- l'arbre tournant est entraîné par un moteur jusqu'à une vitesse angulaire maximale de 8000 tours/min ;
- l'effort variable dans le temps est un effort radial et cyclique, de préférence sinusoïdal ;
- le banc d'essais comporte en outre des moyens pour mesurer la vitesse angulaire de l'arbre et le couple de friction appliqué audit coussinet.

### Brève description des figures

La figure 1 représente une vue globale en perspective du banc d'essais de coussinets selon la présente invention.
La figure 2 représente schématiquement les organes principaux du banc d'essais.
La figure 3 représente une première forme d'exécution du banc d'essais où les ventouses électromagnétiques et leviers sont situés du même côté par rapport à l'axe de l'arbre. On a représenté un seul levier et une seule ventouse électromagnétique.
La figure 4 représente une deuxième forme d'exécution du banc d'essais où les ventouses électromagnétiques et leviers sont respectivement situés de chaque côté par rapport à l'axe de l'arbre (ou tête-bêche).
La figure 5 représente schématiquement une ventouse électromagnétique.
La figure 6 montre, à titre purement illustratif et non limitatif de l'invention, un exemple d'évolution de l'effort obtenu avec une ventouse électromagnétique en fonction de la valeur de l'entrefer (δL) et de l'épaisseur de la charge/contreplaque (a, b, c, d).

### Description d'une forme d'exécution préférée de l'invention

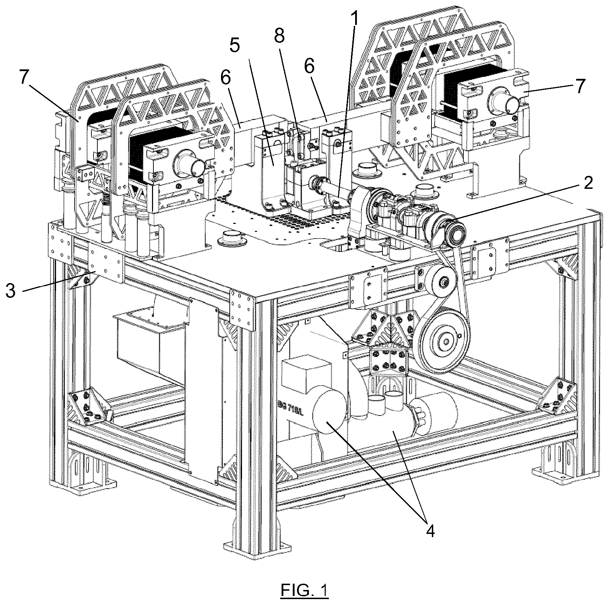

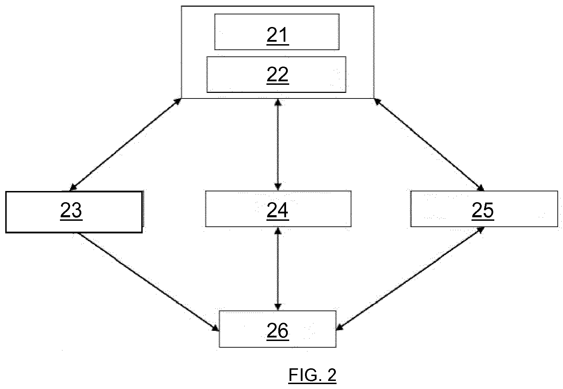

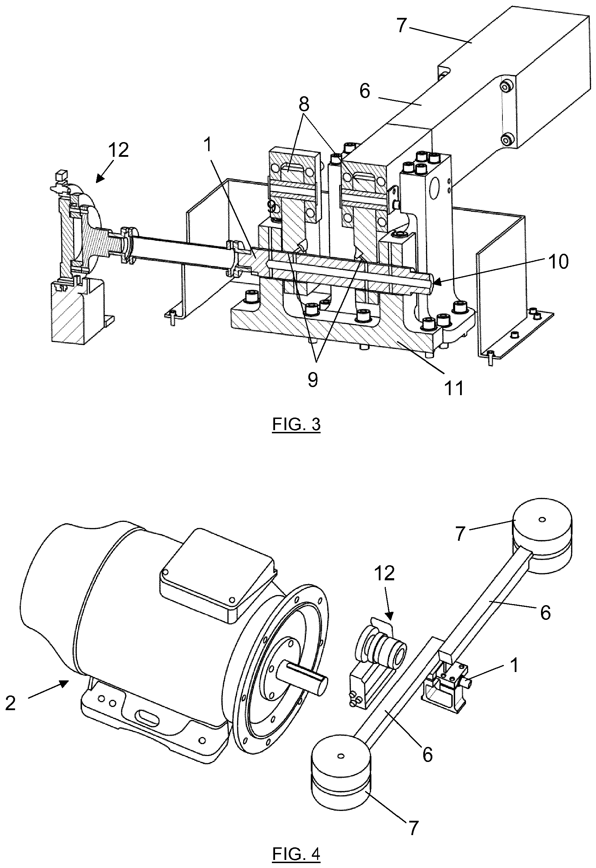

Le banc d'essais pour coussinets selon la présente invention est représenté sur les figures 1 à 4.

La machine de test représentée sur les figures 1 à 4 comprend notamment un châssis avec table rectifiée 3, un système d'entraînement 2, le banc d'essai proprement dit (avec arbre tournant 1, supports 5, leviers 6, bielles 8, paliers 9), des actionneurs électromagnétiques 7, des moyens de distribution d'huile 10 dans l'arbre 1 supportant les coussinets avec un raccord tournant (non représenté), un réservoir d'huile avec son condenseur 4, un système de conditionnement d'air et sa régulation (non représenté), etc.

Le principe de fonctionnement est le suivant. L'axe principal, ou arbre 1, remplaçant le vilebrequin d'un moteur thermique, est placé sur un support 11 de coussinets 9. Des bielles 8 sont ensuite montées sur l'axe 1 et maintenues en position grâce à un ou plusieurs leviers 6 qui permettent de transmettre les efforts.

Plus précisément, le système fonctionne comme suit :
- l'arbre 1 est mis en rotation par l'intermédiaire d'un moteur électrique 2 et la vitesse de rotation est ajustée ;
- la position angulaire de l'arbre 1 est mesurée et connue à tout instant, de manière à pouvoir appliquer avec grande précision la charge au bon moment et en évitant les amenées d'huile vers les coussinets pratiquées radialement dans l'axe 1 ;
- la charge est appliquée au moyen d'un électro-aimant 7 et via le levier correspondant 6 sur la bielle 8 et finalement est transmise au (demi-) coussinet 9 ;
- lors de la mise en charge, le couple de friction des coussinets 9 est mesuré grâce à un couple-mètre 12.

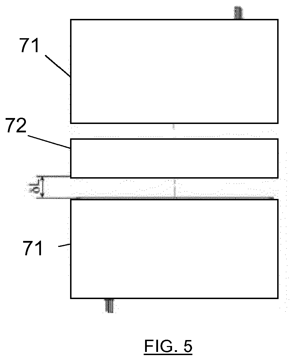

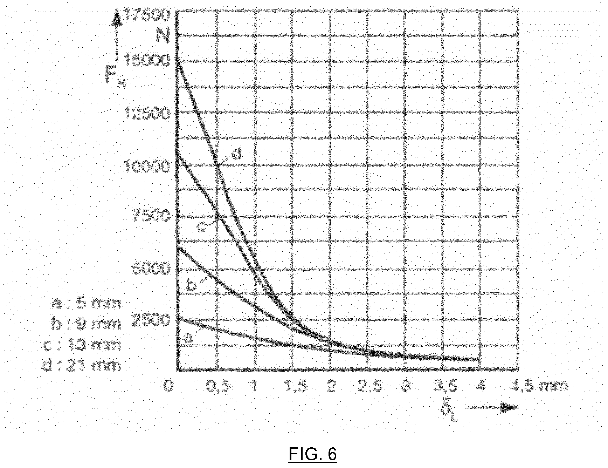

Selon la présente invention, le système de ventouses électromagnétiques 7, connu en soi de l'homme de l'art, permet de générer des efforts plus ou moins importants en fonction de la valeur de l'entrefer δL (figures 5 et 6). La démultiplication de l'effort par un levier permet d'obtenir des charges particulièrement élevées au niveau de chaque bielle. A cette fin, les inventeurs ont utilisé des ventouses électromagnétiques puissantes avec un entrefer le plus petit possible.

Le banc d'essais selon l'invention peut être utilisé de deux manières :
- soit pour tester l'usure et la durée de vie de coussinets ;
- soit pour tester différentes huiles dans des conditions identiques et déterminer celles qui causent plus ou moins de friction.

Le banc d'essais selon l'invention se distingue des bancs d'essais de type bielle/manivelle de l'état de la technique par l'application d'une charge grâce à des moyens électromagnétiques. L'avantage est de pouvoir travailler à plus haute vitesse et plus haute fréquence qu'avec les moyens mécaniques à excentrique habituellement utilisés.

Le contrôle de l'intensité du courant appliquée à la bobine (ventouse), qui crée l'attraction de l'électroaimant (vis-à-vis de la contreplaque), permet un contrôle précis de la charge appliquée. Le système électromagnétique permet de générer des charges très importantes en fonction de la valeur de l'entrefer entre la bobine et l'électroaimant. Enfin, la multiplication de la charge au moyen du levier permet au banc d'essais d'atteindre des charges très importantes au niveau des bielles et en définitive sur les coussinets.

### Symboles de référence

- 1: arbre (modélisant le vilebrequin)
- 2: moteur d'entraînement de l'arbre
- 3: table rectifiée
- 4: réservoir d'huile et condenseur
- 5: support de levier
- 6: levier
- 7: ventouse magnétique
- 8: bielle
- 9: coussinet
- 10: alimentation en huile
- 11: support de coussinets
- 12: couple-mètre
- 21: unité de contrôle
- 22: enregistreur de données
- 23: alimentation électrique
- 24: MIO (Module Input Output)
- 25: conditionnement d'huile
- 26: plateforme de test
- 71: ventouse (bobine)
- 72: Contreplaque (ou pièce mobile)

## Revendications

1. Banc d'essais pour tester les propriétés de friction, ou tribologiques, d'au moins un palier lisse ou coussinet d'essai (9), ledit banc d'essais comprenant un arbre tournant (1), ledit coussinet (9) assurant le guidage de l'arbre tournant (1) lorsque des efforts de traction ou compression sont appliqués de manière dynamique audit coussinet (9), un levier (6), un support de coussinet (11) sur lequel est placé l'arbre tournant (1) et une bielle (8) ayant une tête montée sur l'arbre par l'intermédiaire dudit coussinet (9), **caractérisé en ce que** le banc d'essais comprend un actionneur électromagnétique (7) apte à appliquer un effort variable dans le temps sur la bielle (8), ledit actionneur électromagnétique (7) coopérant avec le levier (6) faisant un angle droit avec la bielle (8), ledit levier (6) procurant une démultiplication de l'effort appliqué par l'actionneur (7) sur la bielle (8) et **en ce que** l'actionneur électromagnétique (7) est sous forme d'une ventouse électromagnétique qui génère un effort en traction ou en compression compris entre 0 et 120 kN pour une valeur d'entrefer comprise entre 8 et 1 mm.

2. Banc d'essais selon la revendication 1, **caractérisé en ce que** le facteur de démultiplication de l'effort par le levier (6) est compris entre 5 et 8.

3. Banc d'essais selon la revendication 1, **caractérisé en ce que** l'arbre tournant (1) est entraîné par un moteur jusqu'à une vitesse angulaire maximale de 8000 tours/min.

4. Banc d'essais selon la revendication 1, **caractérisé en ce que** l'effort variable dans le temps est un effort radial et cyclique.

5. Banc d'essais selon la revendication 4, **caractérisé en ce que** l'effort cyclique est sinusoïdal.

6. Banc d'essais selon la revendication 1, **caractérisé en ce qu'**il comporte en outre des moyens pour mesurer la vitesse angulaire de l'arbre et le couple de friction appliqué audit coussinet (9).

## Patentansprüche

1. Prüfstand zum Testen der Reibungs- oder tribologischen Eigenschaften mindestens eines Gleitlagers oder einer Prüflagerschale (9), wobei der Prüfstand Folgendes umfasst: eine Drehwelle (1), wobei die Lagerschale (9) die Führung der Drehwelle (1) sicherstellt, wenn die Zug- oder Druckkräfte auf dynamische Art und Weise auf die Lagerschale (9) ausgeübt werden, einen Hebel (6), einen Lagerschalenträger (11), auf dem die Drehwelle (1) platziert ist, und einen Pleuel (8) mit einem Kopf, der mit Hilfe der Lagerschale (9) auf der Welle montiert ist, **dadurch gekennzeichnet, dass** der Prüfstand einen elektromagnetischen Aktuator (7) umfasst, der darauf ausgelegt ist, eine im Laufe der Zeit variable Kraft auf den Pleuel (8) auszuüben, wobei der elektromagnetische Aktuator (7) mit dem Hebel (6), der einen rechten Winkel mit dem Pleuel (8) bildet, zusammenwirkt, wobei der Hebel (6) eine Vervielfachung der Kraft bewirkt, die vom Aktuator (7) auf den Pleuel (8) ausgeübt wird, und dadurch, dass der elektromagnetische Aktuator (7) die Form eines elektromagnetischen Flächenhaftmagnets aufweist, der eine Zug- oder Druckkraft generiert, die für einen Luftspaltwert, der zwischen 8 und 1 mm liegt, im Bereich zwischen 0 und 120 kN liegt.

2. Prüfstand nach Anspruch 1, **dadurch gekennzeichnet, dass** das Vervielfachungsverhältnis der Kraft durch den Hebel (6) im Bereich zwischen 5 und 8 liegt.

3. Prüfstand nach Anspruch 1, **dadurch gekennzeichnet, dass** die Drehwelle (1) von einem Motor bis zu einer maximalen Winkelgeschwindigkeit von 8000 U/min. angetrieben wird.

4. Prüfstand nach Anspruch 1, **dadurch gekennzeichnet, dass** die zeitlich variable Kraft eine radiale und zyklische Kraft ist.

5. Prüfstand nach Anspruch 4, **dadurch gekennzeichnet, dass** die zyklische Kraft sinusförmig ist.

6. Prüfstand nach Anspruch 1, **dadurch gekennzeichnet, dass** er außerdem Mittel zum Messen der Winkelgeschwindigkeit der Welle und des Reibmoments, das auf die Lagerschale (9) ausgeübt wird, umfasst.

## Claims

1. A test bench for testing the frictional or tribological properties of at least one plain bearing or test bearing shell (9), said test bench comprising a rotary shaft (1), said bearing shell (9) ensuring guiding of the rotary shaft (1) when traction or compression forces are applied dynamically to said bearing shell (9), a lever (6), a bearing shell support (11) on which the rotary shaft (1) is placed and a connecting rod (8) having a head mounted on the shaft by means of said bearing shell (9), **characterized in that** the test bench comprises an electromagnetic actuator (7) suitable for applying a force that is variable over time on the connecting rod (8), said electromagnetic actuator (7) cooperating with the lever (6) forming a right angle with the connecting rod (8), said lever (6) providing a multiplication of the force applied by the actuator (7) on the connecting rod (8) and **in that** the electromagnetic actuator (7) is in the form of an electromagnetic surface holding magnet that generates a traction or compression force of between 0 and 120 kN for an air gap value of between 8 and 1 mm.

2. The test bench according to claim 1, **characterized in that** the multiplication factor of the force by the lever (6) is comprised between 5 and 8.

3. The test bench according to claim 1, **characterized in that** the rotary shaft (1) is driven by a motor up to a maximum angular speed of 8,000 rpm.

4. The test bench according to claim 1, **characterized in that** the variable force over time is a radial and cyclic force.

5. The test bench according to claim 4, **characterized in that** the cyclic force is sinusoidal.

6. The test bench according to claim 1, **characterized in that** it further includes means for measuring the angular speed of the shaft and the friction torque applied to said bearing shell (9).
